# EUROPEAN PATENT SPECIFICATION

(11) **EP 3 957 870 B1**
(45) Date of publication and mention of the grant of the patent: **25.02.2026**
(21) Application number: 21190834.8
(22) Date of filing: 11.08.2021
(51) Int. Cl.: F16B 12/14, F16B 12/46, F16B 12/20, F16B 12/10

(54) **INTERMEDIATE ASSEMBLY APPARATUS**
ZWISCHENMONTAGEVORRICHTUNG
APPAREIL D'ASSEMBLAGE INTERMÉDIAIRE

(30) Priority: 19.08.2020 TR 202013140
(43) Date of publication of application: 23.02.2022
(73) Proprietor: Mesan Plastik Ve Metal Sanayi Anonim Sirketi, 34590 Silivri Istanbul (TR)
(72) Inventor: ALIOSMAN, Mertoz, Istanbul (TR); VERICIEL, Ahmet, Istanbul (TR)
(74) Representative: Mutlu, Aydin

(56) References cited:
- DE-U1- 202004 000 473
- DE-U1- 202019 102 018
- FR-A1- 2 333 991
- FR-A1- 2 446 946
- GB-A- 2 040 385

## Description

### Technical Field of the Invention

The present invention relates to an intermediate assembly apparatus used in panel furniture production to minimize the production and assembly difficulties of standard connection elements used for connecting two panels to each other.

The present invention provides an intermediate assembly apparatus, which is used for enabling the connection of the two panels to be assembled in various disassembled pieces of furniture such as cabinets, shelves, bedsteads in which all kinds of panels are used in panel furniture production with eccentric puller connection sets, setscrew puller connection sets, and cylindrical puller connection sets.

The present invention is an intermediate assembly apparatus that allows the use of many different types of fasteners employed in joining two panels with holes drilled only from the top surface of the panel and without the need for drilling mounting holes over the side edge called edge.

### State of the Art

Furniture pieces that are created by forming wood are products that are used in almost every field and have many different types as of today. Furniture, which is an indispensable part of all living spaces with different designs, is created by combining a plurality of parts. The desired furniture structure is created by combining different furniture parts that are ready for assembly with auxiliary elements and connection apparatuses.

Since furniture units are used for multiple purposes, the sizes and qualities of the loads that they will be exposed to during use vary greatly. In some cases, they may be under the influence of noticeably light loads, while in some other cases; they may be under the influence of extremely heavy loads. The stability and durability of the furniture under load depend on the physical and mechanical properties of the materials from which the elements are produced by means of combining methods. Furthermore, the fasteners that connect the furniture parts also affect the strength of the furniture.

In addition to the development of production technologies, ensuring pass production to reach different points in the market today has become an important aspect. The transportation of the furniture produced in earlier periods as a whole imposed heavy obligation on both the manufacturer and the consumers. Today, the production and use of modular furniture have become widespread so as to minimize the transportation costs of furniture and to prevent potential physical damage to the products during transportation. The consumption of furniture, which is transported in parts until the stage of use and assembled at the stage of use and referred to as disassembled furniture, increases day by day. Furniture manufacturers and manufacturer suppliers also make significant efforts to develop new production technologies for disassembled furniture. Accessories and fasteners used in furniture are also being developed in order to facilitate both the production and assembly of furniture.

Nowadays, in terms of the production of furniture, the selection of correct connection elements, which are highly durable, easily producible and transportable in parts, and readily mountable and that may be disassembled and reassembled in case the preference of the area of use of the end-user changes in the long term is exceedingly important.

Fasteners are elements or mechanisms that are capable of connecting at least two furniture units or furniture parts or any other material by pulling them towards each other through a mechanical process. Said fasteners not only ensure the completion of the furniture but also ensure its functionality.

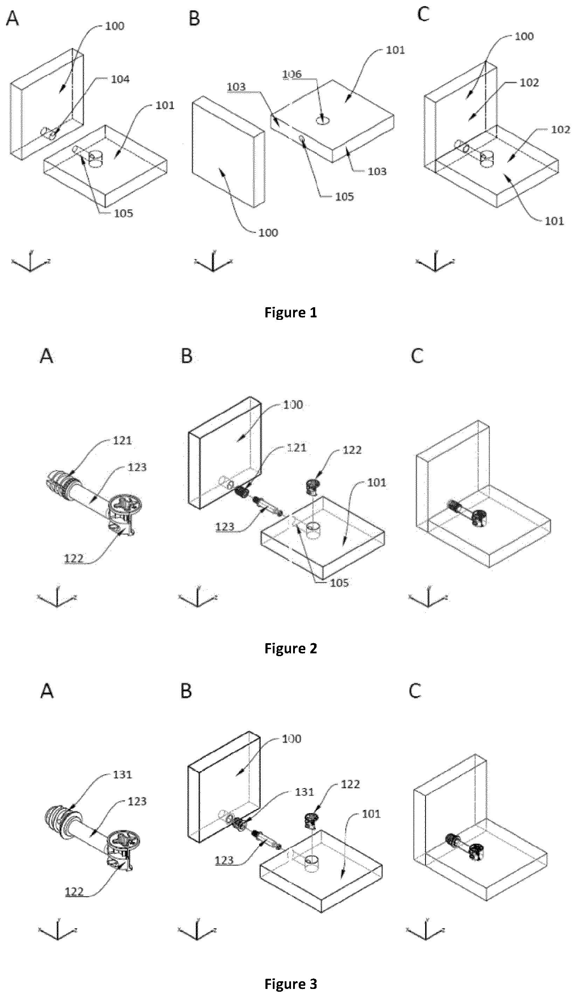

Figure 1 illustrates the views of two prototype panels that constitute the panel furniture from different angles. In the description provided below, the fixed one of said panels will be defined as the fixed panel (100). The other panel to be attached to the fixed panel (100) will be defined as the panel to be fixed (101). The fixed panel (100) and the panel to be fixed (101), which will be described here, have a rectangular prismatic structure with a specific wall thickness. The term upper surface of the panel will be defined as the panel upper surface (102) that extends parallel to the width and length of the panel board. The side surfaces of panel that are parallel to the wall thickness of the panel board will be defined as the edge and/or the panel side surface (103) as used in the sector.

The properties of the fasteners used in the installation of disassembled panel furniture vary based on the field of use. The fields of use, the raw materials from which they are produced, and the materials used in the furniture affect the connection performance of the fasteners. Hence, the performance achieved from each of the fasteners varies depending on said variables.

The main criteria that play a role in the selection and development of the furniture fasteners can be summarized as follows;
- Providing high strength to the furniture to be assembled;
- Not having any negative effects on the aesthetic appearance of the furniture;
- Enabling practical processing and drilling processes to be made on the application points of fasteners (surfaces, edges of panels, etc.);
- Ensuring that an efficient and easy assembly may be performed.

Types and definitions of fastener groups that have been recently developed and generally used in the joining of panel-type modular furniture panels are listed below based on the criteria described above.

| | |
|---|---|
| Type 1 Connection; | Drop-in plastic dowel + screw shaft + eccentric body connection kit |
| | *Figure 2A, Figure 2B, and Figure 2C* *illustrate the application details on the connection set defined as Type 1 and the prototype fixed panel (100) and the panel to be fixed (101).* |
| Type 2 Connection; | Metal screw threaded dowel + screw shaft + eccentric body connection set |
| | *Figure 3A, Figure 3B, and Figure 3C* *illustrate the application details on the connection set defined as Type 2 and the prototype fixed panel (100) and the panel to be fixed (101).* |
| Type 3 Connection; | fastening set with self-plugging shaft + eccentric body |
| | *Figure 4A, Figure 4B, and Figure 4C* *illustrate the application details on the connection set defined as Type 3 and the prototype fixed panel (100) and the panel to be fixed (101).* |
| Type 4 Connection; | Screw-in metal dowel + screw shaft + setscrew body connection set |
| | *Figure 5A, Figure 5B, and Figure 5C* *illustrate the application details on the connection set defined as Type 4 and the prototype fixed panel (100) and the panel to be fixed (101).* |
| Type 5 Connection; | Plastic screw threaded dowel + screw shaft + setscrew body connection set |
| | *Figure 6A, Figure 6B, and Figure 6C* *illustrate the application details on the connection set defined as Type 5 and the prototype fixed panel (100) and the panel to be fixed (101).* |
| Type 6 Connection; | Cylinder puller screw connection set |
| | *Figure 7A, Figure 7B, and Figure 7C* *illustrate the application details on the connection set defined as Type 6 and the prototype fixed panel (100) and the panel to be fixed (101).* |
| Type 7 Connection; | Eccentric puller connection set for movable panels |
| | *Figure 8A, Figure 8B, and Figure 8C* *illustrate the application details on the connection set defined as Type 7 and the prototype fixed panel (100) and the panel to be fixed (101).* |
| Type 8 Connection; | Double holder eccentric puller connection set |
| | *Figure 9A, Figure 9B, and Figure 9C* *illustrate the application details on the connection set defined as Type 8 and the prototype fixed panel (100) and the panel to be fixed (101).* |
| Type 9 Connection; | Connection set with screw puller plastic body |
| | *Figure 10A, Figure 10B, and Figure 10C* *illustrate the application details on the connection set defined as Type 9 and the prototype fixed panel (100) and the panel to be fixed (101).* |

In the following description, the aforementioned fasteners will be referred to with their type names due to their long descriptions. Along with the type, the body element property will also be included in the definition.

Eccentric body connection set groups defined as Type 1, Type 2, and Type 3 and listed above are approved by all manufacturers in the industry and they are the connection sets with the highest usage ratio.

The joining structure of many connection groups, which are developed similar to the eccentric body connection sets, is also designed similar to the eccentric body connection elements.

Likewise, openings (drilling processes) are formed on the panel for the application of eccentric body connection sets which are defined as Type 1, Type 2, and Type 3, and setscrew screw body connection sets defined as Type 4 and Type 5 and cylinder puller screw connection sets defined as Type 6 among the fasteners listed above. The first of the two wood-containing panel boards to be joined is considered as a fixed panel (100), and a hole, a screw hole (104) is drilled on the panel upper surface (102) for screwing in a dowel or cylindrical puller system among these six systems. A body connection hole (106) is in the form of an opening on the panel upper surface (102) for the body connection element in the panel to be fixed (101). In addition, a gap, an edge hole (105) is opened on the panel side surface (103) of the panel to be fixed (101), which is called an edge in the sector such that it is perpendicular to the body connection hole (106).

The application structures of Type 1, Type 2, Type 3, Type 4, and Type 5 connection sets are very similar to each other. In these connection sets, the fixed panel (100) is first attached to the panel upper surface (102) with a dowel or a self-doweled shaft. These dowels are divided into two categories as plastic dowels (121) and metal dowels (131) according to the type of the produced material. As for self-doweled shafts (141), they are designed to serve both as a dowel and as a mounting shaft. Metal shafts (formed shaft (123), setscrew puller shaft (151)) are fixed to the plastic dowel (121) or metal dowel (131) attached to the fixed panel (100). Eccentric puller connections defined as Type 1 and Type 2 utilize formed shafts (123) that are formed according to the gripping structure of the eccentric puller body element (122). The connection sets defined as Type 3 use self-doweled shafts (141). Setscrew puller connection sets defined as Type 4 and Type 5 employ setscrew puller shaft (151) that is formed according to the setscrew puller body element (152). After the shafts (formed shaft (123), self-doweled shaft (141), setscrew puller shaft (151)) are fixed on the fixed panel (100), the shaft (formed shaft (123), self-doweled shaft (141), setscrew puller shaft (151)) located on the fixed panel (100) is inserted through the edge hole (105) of the panel to be fixed (101) to which the shaft will be fixed and subsequently, it is grabbed by means of the body elements (eccentric puller body element (122), setscrew puller body element (152)) and fixed by pulling. In this fixing process, in Type 1, Type 2, and Type 3 eccentric connection sets, the eccentric puller body element (122) is rotated by means of a screwdriver and the clamped shaft (formed shaft (123), self-doweled shaft (141)) and the fixed panel (100) and the panel to be fixed (101) are fixed to each other. In Type 4 and Type 5 setscrew body connection sets, the setscrew (153), advancing towards the puller shaft cavity (154) on the setscrew puller shaft (151), gets tightened by pulling the setscrew puller shaft (151).

When using a Type 6 cylinder puller screw connection set, the puller screw (171), that is inserted into the puller screw hole (173) which is a through-hole opened without using the dowel, reaches the nut threads inside the cylinder puller body (172) through the edge hole (105) opened from the panel side surface (103) and the panels are connected by screw puller.

Eccentric body connection sets defined as Type 1, Type 2, and Type 3 and cylindrical puller connection sets defined as Type 6 are connection groups used in the furniture industry for many years. In particularly, eccentric puller connection sets are the connection sets, which are known by all manufacturers, since they are easy to use, durable, and long-lasting, whereas setscrew body connection sets defined Type 4 and Type 5 are the connection groups that are preferred in furniture that require high strength and provide a strong fixation.

As described in detail above, gaps (holes) created by wood panel processing to be applied for the use of all connection sets defined as Type 1, Type 2, Type 3, Type 4, Type 5 and Type 6 are the same in terms of axis and standard.

Despite the fact that it is practical for production machines to implement a body connection hole (106) created on the panel upper surface (102) of the panel to be fixed (101) by means of the screw hole (104) drilled on the fixed panel (100), the applicability of the edge hole (105) opened on the panel side surface (103) of the panel to be fixed (101) has posed and still poses various difficulties for manufacturers. Furthermore, the automation-intensive and high-capacity panel processing systems available today cannot perform processing applications from the edge surface. The edge holes (105) to be opened from the panel side surface (103) and the openings on a different axis reduce the efficiency of the production process. Holes and openings to be created from the edge side in production processes with automated systems can be ensured with more comprehensive machines. In manual production processes, the holes to be opened from the edge side introduce even further production steps in the production process.

The production process has been in the form of panel sizing and then panel processing in the production of panel furniture in the recent past. During these processes, large-sized panels taken from panel manufacturers are first sized in panel sizing systems to have various sizes according to the field of use, then they are taken to other production stages by making holes, grooves, and performing similar processes in processing machines.

Similar to every production process, the development of automated systems, which are more efficient, and in which the human factor is less influential, continues in the furniture industry. In the panel furniture industry, in parallel to these developments, recent developments have been introduced particularly on panel processing operations. The main object of these studies is to combine the panel processing operation with other processes.

CNC machining systems with wide benches that can process an entire panel have been developed after the requirement of applying the desired processes to the large size panels supplied from the panel manufacturers, in the desired dimensions in a single processing center without exposing the same to any other intermediate sizing processes. The panel with wood content, which is supplied as a whole with these systems, is placed on the vacuum-suction workbench of the machines, and sizing and machining processes are performed on the same bench by means of cutters controlled by a computer. Production processes are carried out under the command of a computer by means of these machines. The efficiency of the system is high, and the application costs are lower compared to earlier applications.

The most important drawback that is experienced in flat bench CNC machining systems is the inability to process the side surfaces of the panels that are processed as a whole. This prevents the use of many types of fasteners that are already being utilized in the sector. Particularly, in flat bench CNC systems, the inability to open holes that are required to be drilled from the edge (103) for the use of eccentric body connection sets has forced both furniture manufacturers and fastener manufacturers to develop different systems. The fasteners that can be used with the holes to be drilled from the wooden panel upper surfaces(102) have been developed in parallel with this requirement.

The main principle of the fasteners to be mounted on the holes drilled from the wooden panel upper surfaces (102) is such that the fastener placed in a body connection hole (106) opened on the panel upper surface (102) of the panel to be fixed (101) and the panel to be fixed (101) is attached to the fixed panel (100). Nowadays, connection sets, which are developed for movable panels, are also applied with this system. For movable panels, defined as Type 7 above, the eccentric puller connection set body (182) is attached to the panel to be fixed (101) by means of being hammered into the surface hole (184), which is a single hole drilled into the panel upper surface (102) of the panel to be fixed (101) and by screw threads (214) around it. During the assembly phase, the eccentric puller screw (181) to be mounted on the fixed panel (100) is attached to the metal eccentric puller (183) inside this connection element and thereby providing the pulling action. This connection system is easily applied for fixing the panel in the movable parts such as shelves in the furniture, however, it is not particularly preferred in large-sized furniture since it is not as durable as connection sets defined as Type 1, Type 2, Type 3, Type 4, Type 5 and Type 6.

Searching for fasteners, which are as durable as Type 1, Type 2, Type 3, Type 4, Type 5, and Type 6 fasteners and which can only be applied with operations from the upper surface prompted manufacturers to develop fasteners defined as Type 7 and double gripper eccentric puller connection sets defined as Type 8. In the connection set defined as Type 7 in this system, the eccentric puller connection set body (182), which is placed on the panel to be fixed (101), is applied by means of a retaining hole (185), which is a second hole to be opened on the panel upper surface (102) of the panel to be fixed (101) and by adding a second holder (186) to the plastic body (187) to be fixed on the retaining hole (185). Although the resistance is increased, it has not been accepted in the sector to use the improved version of a fastener which is used only for fixing shelf-type movable elements in the assembly of all furniture elements. Furthermore, the mechanical tests such as tensile and stretching, etc. conducted with panels fixed to each other with connection sets defined as Type 7 and connection sets defined as Type 8, have determined that the fasteners do not possess the strength to enable them to be used in large-scale furniture.

Recently, screw-puller plastic-bodied connection sets defined as Type 9, have been developed in accordance with the requirement of a safer fastener that can only be used by fixing the holes drilled from the upper surface. In this connection system, an pre-mounted screw (193) is placed into the channel inside the setscrew plastic part (192), which is mounted in the double holes (194) drilled on the panel to be fixed (101) on the panel upper surface (102). This screw is attached to a metal dowel (131) on the fixed panel (100) and the pre-mounted screw (193) is tightened with the angled Allen key (195) and the fixing process is performed by pulling. The setscrew plastic part (192) is closed with a body cover (191) so that the pre-mounted screw (193) and the connection inside the body are not visible after the fixing process. Connection sets defined as Type 9 provide a more durable connection compared to Type 8 connection sets. Fixing the panel to be fixed (101) in the panel joints to the double holes (194) to be drilled from the panel upper surface (102) and assembling without the need for a hole to be drilled from the panel side surface (103) is preferred by the companies which make production with flat bench automation systems and whose production processes are structured according to holes to be drilled on a single axis.

Fixation with a plastic step inside the setscrew plastic part (192) of the connection element with the pre-mounted screw (193) attached to the metal dowel (131) on the fixed panel (100) in screw puller fastening systems raises a question regarding the durability of the connection system. Respective tests determined that the connection sets defined as Type 9 do not offer a strong connection as much as the connection sets defined as Type 1, Type 2, Type 3, Type 4, Type 5, and Type 6. This drawback has been tried to be eliminated by the manufacturers by increasing the number of fasteners used at the junction points. In parallel thereto, the necessity of using a large number of fasteners at each junction has a negative impact on production costs. This disadvantage of connection systems defined as Type 9 is ignored by the manufacturers since there is not an alternative high-tolerance connection system to be connected only with the holes to be drilled from the panel upper surface (102).

The assembly of the pre-mounted screw (193), which is located on the panel to be fixed (101) in the Type 9 connection set, aligned with the metal dowel (131) on the fixed panel (100), and reduced the installation efficiency during the assembly process. In eccentric puller connection systems, this process is applied by fastening the shaft (formed shaft (123), self-doweled shaft (141), setscrew puller shaft (151)) by aligning the panel to be fixed (101) to the assembly shaft (formed shaft (123), self-doweled shaft (141), setscrew shaft (151)) that is assembled on the fixed panel (100) through the edge (105). For the assembly of connection sets defined as Type 1, Type 2, Type 3, Type 4, Type 5, and Type 6, a more practical assembly is provided compared to the Type 9 connection set by opening the edge hole (105) from the panel side surface (103) of the panel to be fixed (101) wider than the diameter of the shaft (formed shaft (123), self-doweled shaft (141), setscrew puller shaft (151)) and allowing the shaft to be fixed and fastening the movable panel to be fixed (101) to the shaft (formed shaft (123), self-doweled shaft (141), setscrew puller shaft (151)). However, this disadvantage of the screw puller connection systems is also ignored by the manufacturers since there is not any durable and alternative connection system to be installed in a practical way only with holes to be drilled from the top surface.

While aligning the metal dowel (131) on the fixed panel (100) with the pre-mounted screw (193) during assemblies performed with Type 9 connection sets, the necessity of aligning the endpoint of the pre-mounted screw (193) with the plastic dowel (121) hole renders the assembly conditions more difficult. In connection sets defined as Type 1, Type 2, Type 3, Type 4, Type 5, and Type 6, since the diameter of the edge hole (105) opened on the panel side surface (103) is larger and the diameter of the fixing shaft (formed shaft (123), self-doweled shaft (141), setscrew puller shaft (151)) is approximately 20% smaller than the diameter of the edge hole (105), eccentric puller connection elements can be mounted in more tolerant conditions. Particularly, processing errors less than 1 mm occur in edge holes (105) drilled from the panel side surface (103) and screw holes (104), which are usually drilled on fixed panels (100), can be eliminated at the assembly stage by means of this tolerance. While eccentric pulling is performed during the fixing process, after the panels are aligned with respect to other panels, corner extensions, which are particularly formed in corner joint panels, can be removed by means of a pulling process. In the assemblies made with Type 9 connection sets, fixing operation is carried out with the screw inside the body (193) and it is attached to the treads of the plastic dowel (121) by fully aligning the pre-mounted screw (193). In the assembling operations performed under these conditions, the tolerance ratios are at minimum levels. Measurement errors and protrusions occur at the junction points of the panels in improper drilling processes. However, this disadvantage of the screw puller connection systems is also ignored by the manufacturers since there is no alternative high-tolerance connection system to be connected only with the holes to be drilled from the panel upper surface (102).

In Type 9 connection sets, the processes of attaching the pre-mounted screw (193) placed in the setscrew plastic part (192) into the dowel hole and tightening it by turning with an Allen key (195) are more difficult than the assembling operation performed with the connection sets defined as Type 1, Type 2, Type 3, Type 4, Type 5 and Type 6. Fixing and pulling processes are carried out in a practical manner in assemblies made with Type 1, Type 2, Type 3, Type 4, Type 5 connection sets. In connection sets defined as Type 9, using an Allen key (195) with an angled-tip, which is a special tool, and using this Allen key (195) by turning it at an angle to the operation area during the fixing of the screw, induces negative results both in terms of ergonomics and of the efficiency of assembly and installation processes. However, this disadvantage of the screw puller connection systems is also ignored by the manufacturers, since there is no alternative connection system with practical use to be connected only with the holes to be drilled from the panel upper surface (102).

In Type 9 connection sets, the panel to be fixed (101) has a layer that enables the setscrew plastic part (192), which is placed by nailing to the panel upper surface (102) to hold on the panel upper surface (102). A minimum of 0.75 mm elevation difference between the upper surface of the setscrew plastic part (192) and the panel upper surface (102) is created due to this level, which is called a cap (196) in the field. This elevation difference makes it difficult to use other fasteners and accessories during the assembly process. Drawer rails and other elements that may correspond to this protrusion cannot be fully attached to the surface. In the connection sets defined as Type 1, Type 2, Type 3, Type 4, Type 5, and Type 6, the eccentric body (eccentric puller body element (122) or setscrew puller body element (152) or cylinder puller body (172)) does not form any protrusion on the panel surface.

A novel intermediate assembly apparatus has been developed by considering the advantages and disadvantages arising from the use of the fasteners as described above in the state of the art. The apparatus of the invention is an intermediate assembly apparatus that will allow the use of all Type 1, Type 2, Type 3, Type 4, Type 5, and Type 6 connection sets, which have been used for many years with holes drilled only on the panel upper surface (102) of the panel to be fixed (101).

Following the preliminary survey conducted in the state of the art, the patent document numbered **"**DE202004000473U1**"** is identified as relevant prior art.

In the subject matter of this document, connecting apparatus for joining hollow plates, in particular honeycomb plates, sandwich plates, or the like, includes a clamping element rotatably mounted in a housing and receiving the head of a respective clamping bolt provided with threads at its free end is disclosed.

Following the preliminary survey conducted in the state of the art, the patent document numbered "DE202019102018U1" was examined. In the subject matter of invention, a new corner connector which is in a class of connectors used in furniture and designed for use between components which are perpendicularly connected to each other and which allows users easy installation is disclosed.

### The Advantage and the Brief Description of the Invention

The present invention provides intermediate assembly apparatus as defined in claim 1. Preferred features of the invention are set out in the dependent claims. The present invention is fixed into at least two-panel holes created on the panel upper surface (102) of the panel to be fixed (101), and it allows the use of eccentric puller connection sets defined as Type 1, Type 2, and Type 3, setscrew puller connection sets defined as Type 4, Type 5, and cylindrical puller connection sets defined as Type 6. The need to drill holes from the panel side surface (103) is eliminated by means of the intermediate assembly apparatus (200) located on the panel to be fixed (101). A more durable, more practical, more ergonomic and high-tolerance installations can be carried out by means of the present invention. The fixed panel (100) to be joined and the panel to be fixed (101) can be fixed to each other without forming a protrusion on the surface of the panels.

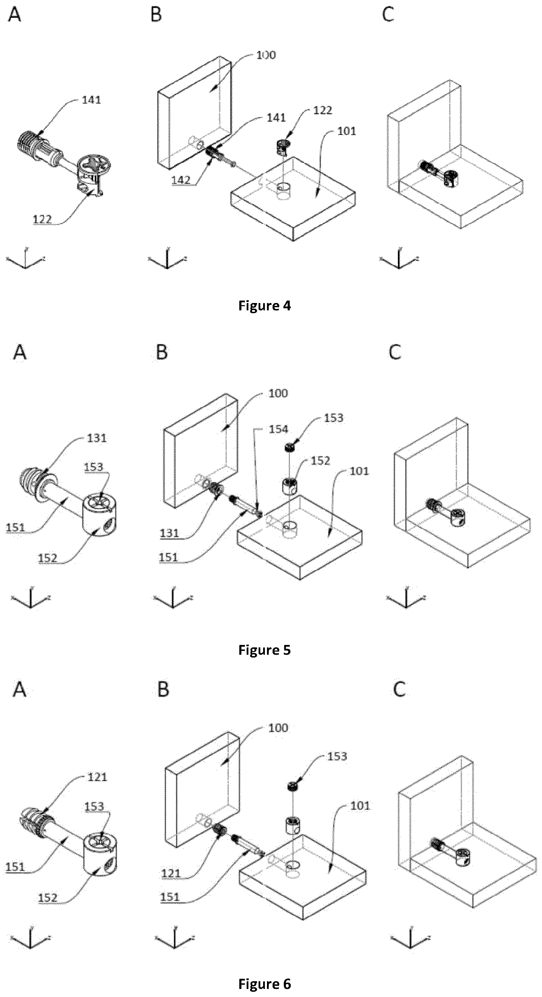

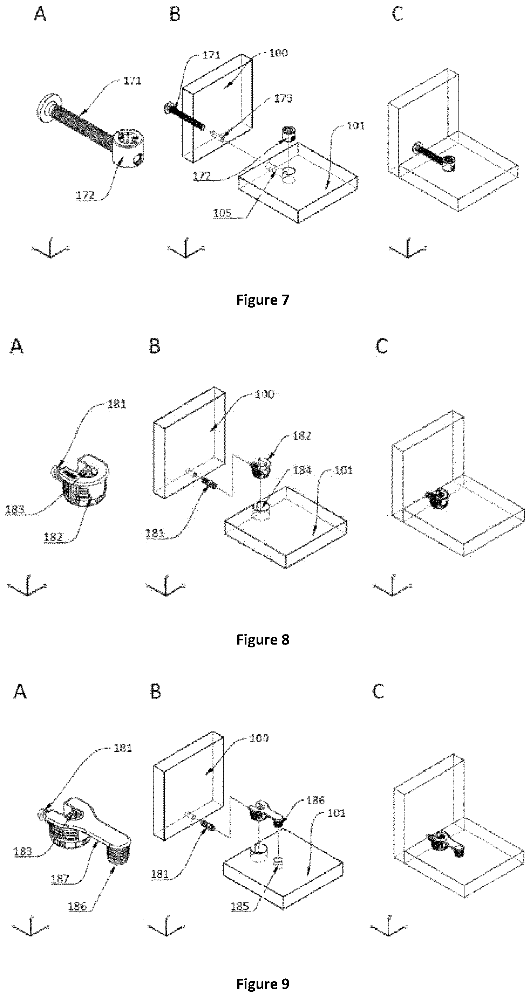

The connection sets listed in the following can be used without drilling holes on the panel side surfaces (103) of the panel to be fixed (101) and only with the intermediate assembly apparatus slot (201) opened on the panel upper surface (102) by means of the intermediate assembly apparatus (200). Figures 1 to 10 illustrate known connection sets suitable for use with the intermediate assembly apparatus. The invention, however, relates exclusively to the intermediate assembly apparatus.

| | |
|---|---|
| Type 1 Connection; | Drop-in plastic dowel + screw shaft + eccentric body connection set (Figure 2A) |
| | *The assembly details of the connections made by using the Type 1 connection set and the Intermediate assembly apparatus (200) (3-Hole form) are illustrated in* *Figure 20A and Figure 20B**.* |
| | *The assembly details of the connections made by using the Type 1 connection set and the Intermediate assembly apparatus (200) (2-Hole form) are illustrated in* *Figure 26A and Figure 26B**.* |
| Type 2 Connection; | Metal screw threaded dowel + screw shaft + eccentric body connection set (Figure 3A) |
| | *The assembly details of the connections made by using the Type 2 connection set and the Intermediate assembly apparatus (200) (3-Hole form) are illustrated in* *Figure 21A and Figure 21B**.* |
| | *The assembly details of the connections made by using the Type 2 connection set and the Intermediate assembly apparatus (200) (2-Hole form) are illustrated in* *Figure 27A and Figure 27B**.* |
| Type 3 Connection; | Self doweled shaft + eccentric body connection set (Figure 4A) |
| | *The assembly details of the connections made by using the Type 3 connection set and the Intermediate assembly apparatus (200) (3-Hole form) are illustrated in* *Figure 22A and Figure 22B**.* |
| | *The assembly details of the connections made by using the Type 3 connection set and the Intermediate assembly apparatus (200) (2-Hole form) are illustrated in* *Figure 28A and Figure 28B**.* |
| Type 4 Connection; | Drop-in plastic dowel + screw shaft + setscrew body connection set (Figure 5A) |
| | *The assembly details of the connections made by using the Type 4 connection set and the Intermediate assembly apparatus (200) (3-Hole form) are illustrated in* *Figure 24A and Figure 24B**.* |
| | *The assembly details of the connections made by using the Type 4 connection set and the Intermediate assembly apparatus (200) (2-Hole form) are illustrated in* *Figure 30A and Figure 30B**.* |
| Type 5 Connection; | Metal screw threaded dowel + screw shaft + setscrew body connection set (Figure 6A) |
| | *The assembly details of the connections made using the Type 5 connection set and the Intermediate assembly apparatus (200) (3-Hole form) are illustrated in* *Figure 23A and Figure 23B**.* |
| | *The assembly details of the connections made using the Type 5 connection set and the Intermediate assembly apparatus (200) (2-Hole form) are illustrated in* *Figure 29A and Figure 29B**.* |
| Type 6 Connection; | Cylinder puller screw connection set (Figure 7A) |
| | *The assembly details of the connections made by using the Type 6 connection set and the Intermediate assembly apparatus (200) (3-Hole form) are illustrated in* *Figure 25A and Figure 25B**.* |
| | *The assembly details of the connections made by using the Type 6 connection set and the Intermediate assembly apparatus (200) (2-Hole form) are illustrated in* *Figure 31A and Figure 31B**.* |

### Description of the Figures

- **FIGURE 1**: illustrates the view of two prototype panels forming panel furniture of the prior art (1A: illustrates isometric view, 1B: illustrates the separate perspective view of panels, 1C: illustrates the assembled perspective view)
- **FIGURE 2**: illustrates the Type 1 Connection-Drop-in plastic dowel + screw shaft + eccentric body connection set of the prior art (2A: illustrates Type 1 connection set, 2B: illustrates the holes drilled into panels for the assembly of Type 1 connection set and demonstration of mounting in panels, 2C: illustrates the Type 1 connection set assembled in the holes in panels)
- **FIGURE 3**: illustrates the Type 2 Connection-Metal screw-threaded dowel + screw shaft + eccentric body connection set of the prior art (3A: illustrates Type 2 connection set, 3B: illustrates holes drilled into panels for the assembly of Type 2 connection set and demonstration of mounting in panels, 3C: illustrates the Type 2 connection set assembled in the holes in panels)
- **FIGURE 4**: illustrates the Type 3 Connection-fastening set with self-doweled shaft + eccentric body of the prior art (4A: illustrates the Type 3 connection set, 4B: illustrates the holes drilled into panels for the assembly of Type 3 connection set and demonstration of mounting in panels, 4C: illustrates the Type 3 connection set assembled in the holes in panels)
- **FIGURE 5**: illustrates the Type 4 Connection-Drop-in plastic dowel + screw shaft + setscrew body connection set of the prior art (5A: illustrates the Type 4 connection set, 5B: illustrates holes drilled into panels for the assembly of Type 4 connection set and demonstration of mounting in panels, 5C: illustrates the Type 4 connection set assembled in the holes in panels)
- **FIGURE 6**: illustrates Type 5 Connection-Metal screw-threaded dowel + screw shaft + setscrew body connection set of the prior art (6A: illustrates the Type 5 connection set, 6B: illustrates the holes drilled into panels for the assembly of Type 5 connection set and demonstration of mounting in panels, 6C: illustrates the Type 5 connection set assembled in the holes in panels)
- **FIGURE 7**: illustrates the Type 6 Connection-Cylinder puller screw connection set of the prior art (7A: illustrates the Type 6 connection set, 7B: illustrates the holes drilled into panels for the assembly of Type 6 connection set and demonstration of mounting in panels, 7C: illustrates the Type 6 connection set assembled in the holes in panels)
- **FIGURE 8**: illustrates the Type 7 Connection- Eccentric puller connection set for movable panels of the prior art (8A: illustrates the Type 7 connection set, 8B: illustrates the holes drilled into panels for the assembly of Type 7 connection set and demonstration of mounting in panels, 8C: illustrates the Type 7 connection set assembled in the holes in panels)
- **FIGURE 9**: illustrates the Type 8 Connection-Double holder eccentric puller connection set of the prior art (9A: illustrates the Type 8 connection set, 9B: illustrates the holes drilled into panels for the assembly of Type 8 connection set and demonstration of mounting in panels, 9C: illustrates the Type 8 connection set assembled in the holes in panels)
- **FIGURE 10**: illustrates the Type 9 Connection-connection set with screw puller plastic body of the prior art (10A: illustrates the Type 9 connection set, 10B: illustrates the holes drilled into panels for the assembly of Type 9 connection set and demonstration of mounting in panels, 10C: illustrates the Type 9 connection set assembled in the holes in panels) 10D: illustrates the Type 9 tightening the connection set screw with angled Allen screw.
- **FIGURE 11**: illustrates the view of the mounting holes drilled on the panels where the intermediate mounting apparatus subjected to the invention will be placed (11A: illustrates the isometric representation of mounting holes on individual panels, 11B: illustrates the perspective view of mounting holes on panels, 11C: illustrates the isometric representation of mounting holes on assembled panels, 11D: illustrates the top view of the holes drilled for the intermediate assembly apparatus).
- **FIGURE 12**: illustrates the top perspective view of the 3-hole form of the intermediate assembly apparatus subjected to the invention.
- **FIGURE 13**: illustrates the top perspective view of the 2-hole form of the intermediate assembly apparatus subjected to the invention.
- **FIGURE 14**: illustrates the bottom perspective view of the 3-hole form of the intermediate assembly apparatus subjected to the invention.
- **FIGURE 15**: illustrates the bottom perspective view of the 2-hole form of the intermediate assembly apparatus subjected to the invention.
- **FIGURE 16**: illustrates the top perspective view of the 3-hole form of the intermediate assembly apparatus subjected to the invention.
- **FIGURE** 17: illustrates the top perspective view of the 2-hole form of the intermediate assembly apparatus subjected to the invention.
- **FIGURE 18**: illustrates the top perspective view of the 3-hole form of the intermediate assembly apparatus subjected to the invention with the body element therein.
- **FIGURE 19**: illustrates the top perspective view of the 2-hole form of the intermediate assembly apparatus subjected to the invention with the body element therein.

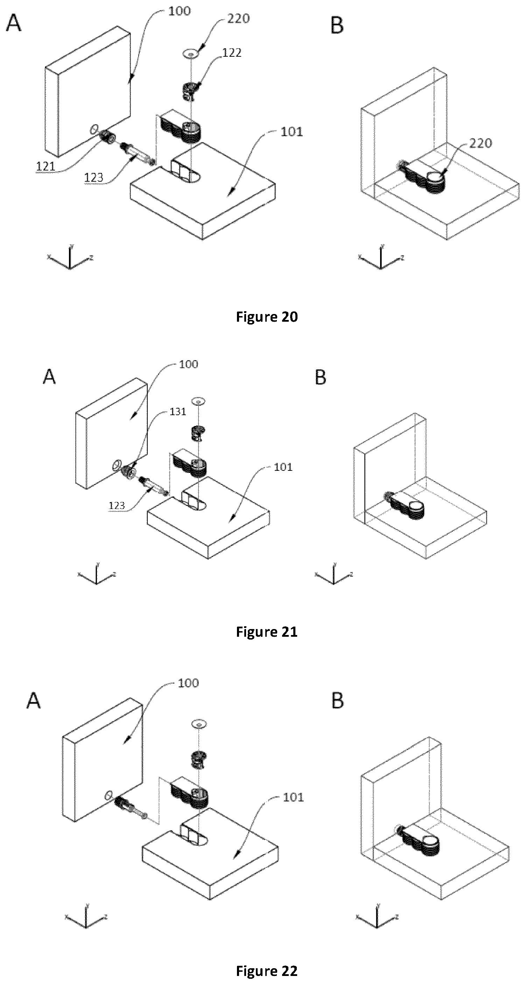

- **FIGURE 20**: illustrates the top perspective view of the assembly of a 3-hole form of the intermediate assembly apparatus subjected to the invention with a Type 1 connection set (20A: illustrates the exploded assembly view, 20B: illustrates the assembled view).
- **FIGURE 21**: illustrates the assembly view of a 3-hole form of the intermediate assembly apparatus subjected to the invention with a Type 2 connection set (21A: illustrates the exploded assembly view, 21B: illustrates the assembled view).
- **FIGURE 22**: illustrates the assembly view of a 3-hole form of the intermediate assembly apparatus subjected to the invention with a Type 3 connection set (22A: illustrates the exploded assembly view, 22B: illustrates the assembled view).

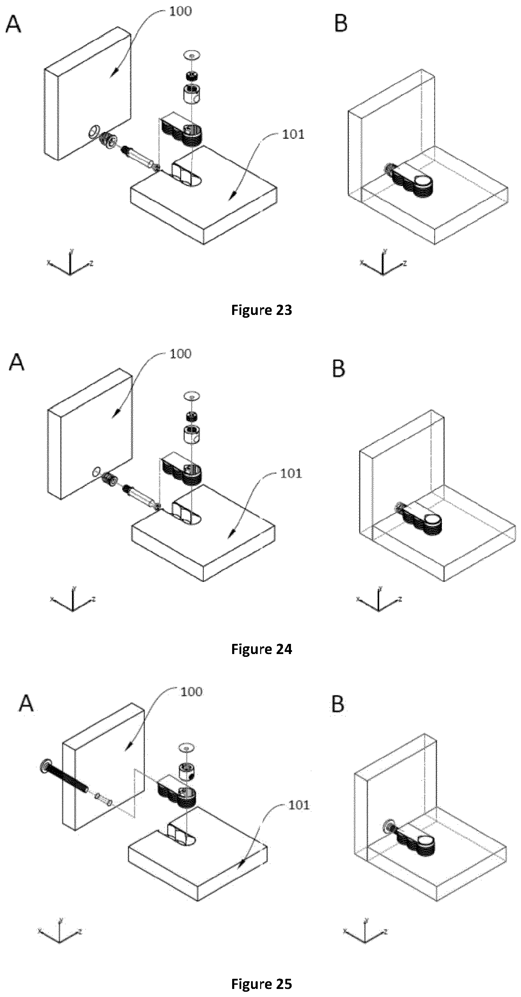

- **FIGURE 23**: illustrates the assembly view of a 3-hole form of the intermediate assembly apparatus subjected to the invention with a Type 4 connection set (23A: illustrates the exploded assembly view, 23B: illustrates the assembled view).
- **FIGURE 24**: illustrates the assembly view of a 3-hole form of the intermediate assembly apparatus subjected to the invention with a Type 5 connection set (24A: illustrates the exploded assembly view, 24B: illustrates the assembled view).
- **FIGURE 25**: illustrates the assembly view of a 3-hole form of the intermediate assembly apparatus subjected to the invention with a Type 6 connection set (25A: illustrates the exploded assembly view, 25B: illustrates the assembled view).

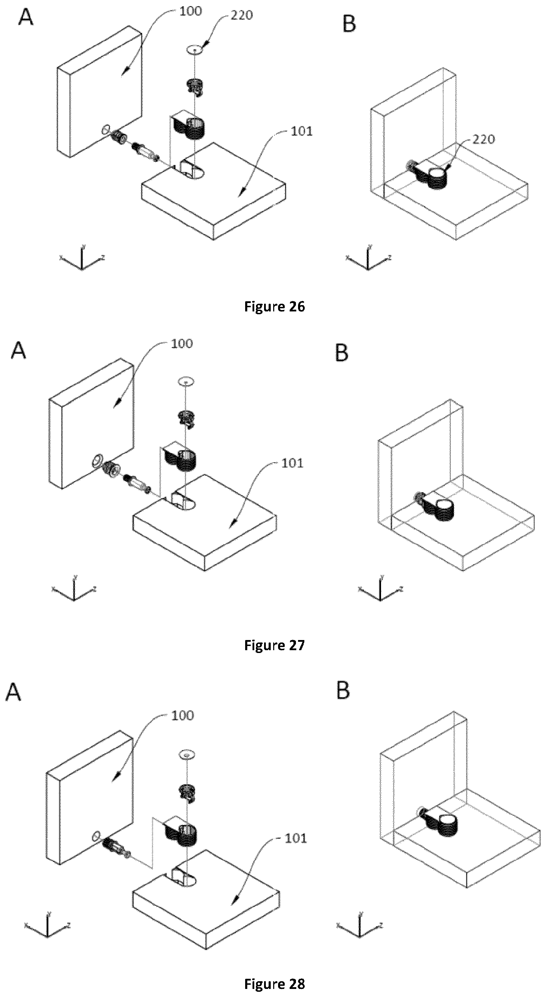

- **FIGURE 26**: illustrates the assembly view of a 2-hole form of the intermediate assembly apparatus subjected to the invention with a Type 1 connection set (60A: illustrates the exploded assembly view, 26B: illustrates the assembled view).
- **FIGURE 27**: illustrates the assembly view of a 2-hole form of the intermediate assembly apparatus subjected to the invention with a Type 2 connection set (27A: illustrates the exploded assembly view, 27B: illustrates the assembled view).
- **FIGURE 28**: illustrates the assembly view of a 2-hole form of the intermediate assembly apparatus subjected to the invention with a Type 3 connection set (28A: illustrates the exploded assembly view, 28B: illustrates the assembled view).

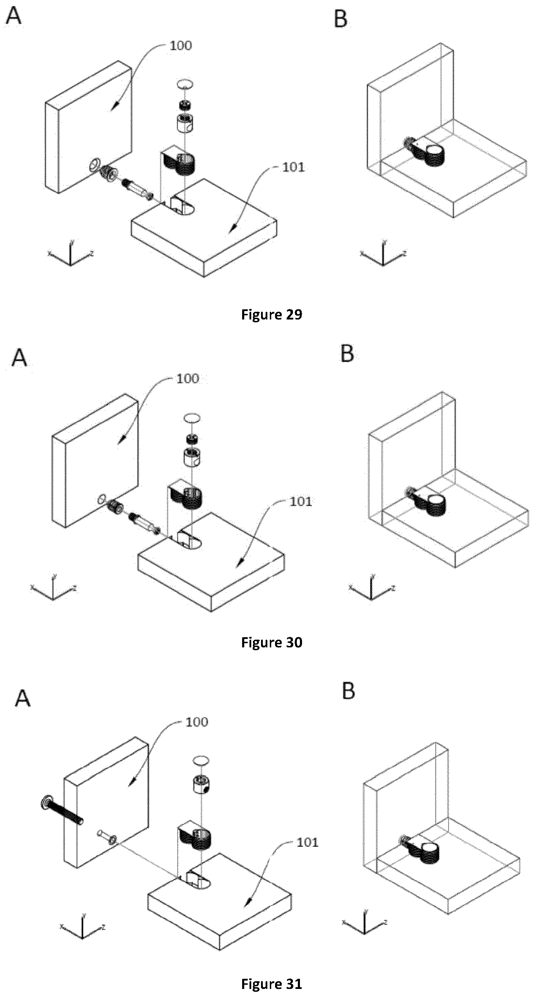

- **FIGURE 29**: illustrates the Assembly view of a 2-hole form of the intermediate assembly apparatus subjected to the invention with a Type 4 connection set (29A: illustrates the exploded assembly view, 29B: illustrates the assembled view).
- **FIGURE 30**: illustrates the assembly view of a 2-hole form of the intermediate assembly apparatus subjected to the invention with a Type 5 connection set (30A: illustrates the exploded assembly view, 30B: illustrates the assembled view).
- **FIGURE 31**: illustrates the assembly view of a 2-hole form of the intermediate assembly apparatus subjected to the invention with a Type 6 connection set (31A: illustrates the exploded assembly view, 31B: illustrates the assembled view).

### Description of the References in the Figures

| | | |
|---|---|---|
| 100. Fixed Panel | 151. Setscrew Puller Shaft | 191. Body Cover |
| 101. Panel to Be Fixed | 152. Setscrew Puller Body Element | 192. Setscrew Plastic Part |
| 102. Panel Upper Surface | 153. Setscrew | 193. Pre-mounted Screw |
| 103. Panel Side Surface | 154. Puller Shaft Cavity | 194. Double Hole |
| 104. Screw Hole | 171. Puller Screw | 195. Allen Key |
| 105. Edge Hole | 172. Cylinder Puller Body | 196. Cap |
| 106. Body Connection Hole | 173. Puller Screw Hole | 200. Intermediate Assembly Apparatus |
| 121. Plastic Dowel | 181. Eccentric Puller Screw | 201. Intermediate Assembly Apparatus Slot |
| 122. Eccentric Puller Body Element | 182. Eccentric Puller Connection Set Body | 202. Panel Hole Rectangular Pocket |
| 123. Formed Shaft | 183. Eccentric Puller | 212. Apparatus Facade Surface |
| 131. Metal Dowel | 184. Surface Hole | 213. Shaft Slot |
| 141. Self-Doweled Shaft | 185. Retaining hole | 214 Screw Threads |
| 142. Skirt | 186 Second Holder | 215. Apparatus Back Surface |
| | 187. Plastic Body | 216. Body Element Slot |
| | | 217. Apparatus Upper Surface |
| | | 218. Thread |
| | | 219. Recess Section |
| | | 220. Cover |
| | | 230. Circular Body |
| | | 231. Apparatus Bottom Surface |

### Detailed Description of the Invention

The present invention relates to an intermediate assembly apparatus (200) that is used to connect the fixed panel (100) to be joined and the panel to be fixed (101), in disassembled furniture produced by using panels with wood content. Said intermediate assembly apparatus (200) is an intermediate assembly apparatus (200) which is used to provide the connection of the panel to be fixed (101) to the shaft or a puller screw (171) that is attached to a fixed panel (100) by means of screwing in various furniture such as cabinet, bedstead, table etc. where panel boards with wood content that are desired to be fixed to each other are used.

The intermediate assembly apparatus (200) of the invention is used with standard fasteners that have been used in the industry for many years for the purpose of fixing panels, which make up a piece of furniture. The production and assembly stages applied in the use of the invention are specified in the following, respectively.

***Stage 1-**The processing of the panel boards that will form the furniture on the panel processing benches.* At this stage, the processes to be carried out only on the upper surfaces of the panels (102) that make up the furniture are sufficient for the use of the intermediate assembly apparatus (200). While using the intermediate assembly apparatus (200), any drilling process is required on the panel side surface (103) which is defined with the term edge of the panel to be fixed (101). The present invention ensures that the connection sets defined as Type 1, Type 2, Type 3, Type 4, Type 5 and Type 6, which have been used for a long time and are described in detail in the state of the art, may be used without performing any process from the panel side surface (103), which is called edge.

***Stage 2-*** Attaching a plastic dowel (121) or metal dowel (131) to the screw hole (104) drilled on the fixed panel (100) from two panels to be connected to each other, which will enable the fixing shaft (formed shaft (123), setscrew puller shaft (151)) to be fastened. As a different alternative, this plastic dowel (121) or metal dowel (131) may be attached directly to the screw holes (104) drilled on the fixed panel (100) in self-doweled shafts (141). Again as an alternative, the cylindrical puller screw (171) described in the state of the art may be used with said intermediate assembly apparatus (200) by being placed into the full hole formed puller hole (173) opened on the fixed panel (100).

***Stage* 3-** The assembly shafts (formed shaft (123), setscrew puller shaft (151)) to be used are fixed to the nut cavity in the inner section of the plastic dowel (121) or metal dowel (131) that are fixed by means of screw threads (214) at their end points.

In the cylindrical puller system defined as Type 6, which is described in detail in the state of the art, the puller screw (171) that will provide the connection is attached thoroughly into the puller screw hole (173) that is opened to the fixed panel (100).

***Stage 4-*** The plastic intermediate assembly apparatus (200) of the invention is hammered into the intermediate assembly apparatus slot (201) opened from the panel upper surface (102) of the panel to be fixed (101) by means of a plastic hammer. During this process, the screw threads (214) on the side surface of the said intermediate assembly apparatus (200) enable the intermediate assembly apparatus (200) to be attached to the panel to be fixed (101) with wood content to be fixed.

***Stage 5-*** Placing the eccentric puller body element (122) or the setscrew puller body element (152) or the cylinder puller body (172) into the body element slot (216) located on the upper surface of the intermediate assembly apparatus (200) attached to the panel to be fixed (101).

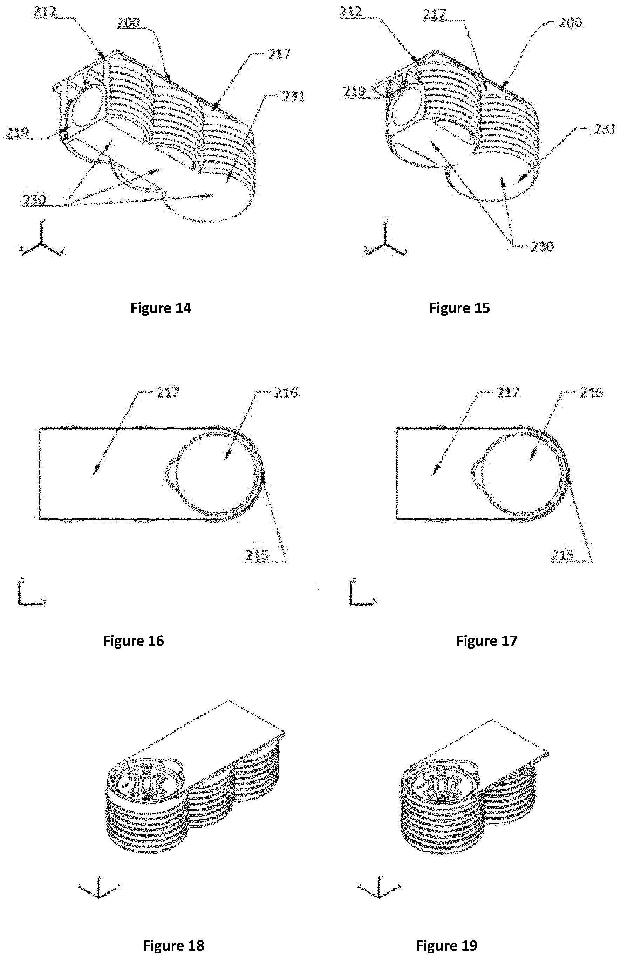

The top views of the two-hole form and the three-hole form of the intermediate assembly apparatus (200) are illustrated in Figures 16 and 17. When viewed from the top, the apparatus upper surface (217) of the intermediate assembly apparatus (200) is in the closed form, in the section close to the apparatus back surface (215), there is a body element slot (216) of the assembly body element, where the eccentric puller body element (122) or the setscrew puller body element (152) or the cylinder puller body (172) can enter. According to the invention, the body element slot (216) is a circular cavity, and alternative body elements (eccentric puller body element (122) or setscrew puller body element (152) or cylinder puller body (172)) are positioned therein. According to the invention, the body element slot (216) is on the central "y" axis, it starts from the apparatus upper surface (217) and ending at the apparatus bottom surface (231) by leaving a minimum space. The body element slot (216) has an open structure on the apparatus upper surface (217), it houses the body element (eccentric puller body element (122) or setscrew puller body element (152) or cylinder puller body (172)) to be placed inside such that its bottom is closed on the apparatus bottom surface (231). According to the invention, threads (218) are formed towards the apparatus bottom surface (231), starting from the apparatus upper surface (217) within the body element slot (216) so as to prevent the body element (eccentric puller body element (122) or setscrew puller body element (152) or cylinder puller body (172)) to be placed in the body element slot (216) from coming out by swinging back from there. After the body element (eccentric puller body element (122) or setscrew puller body element (152) or cylinder puller body (172)) is inserted into the body element slot (216) by means of the opened threads (218), tight coupling is ensured, and back oscillation is prevented. After the assembly of body elements without threads (218) and which are inserted into the body connection holes (106), especially drilled into wood panels for eccentric puller body element (122) or setscrew puller body element (152) or cylinder puller body (172), the pulling process often causes swinging back. Similarly, before the panels are joined, the body elements (eccentric puller body element (122) or setscrew puller body element (152) or cylinder puller body (172)) inserted into the body connection holes (106) opened in the wooden panels can fall off by releasing from the slot during transportation and assembly. These defects are eliminated by means of the intermediate assembly apparatus (200) and the body element (eccentric puller body element (122) or setscrew puller body element (152) or cylinder puller body (172)) is prevented from coming out of the slot and swinging back after fixing. In Figure 18 and Figure 19, it is observed that the body elements (eccentric puller body element (122) or setscrew puller body element (152) or cylinder puller body (172)) are placed inside the alternative intermediate assembly apparatus (200).

***Stage* 6-** Alignment of connecting shaft (formed shaft (123) or self-doweled shaft (141) or setscrew puller shaft (151)) or cylindrical puller screw (171) to the shaft slot (213) located in the facade area of the intermediate assembly apparatus (200) which is nailed onto the panel to be fixed (101) and then placing the screw or shaft up to the center of the coupling or the puller by pushing the panel towards the shaft or screw.

The shaft slot (213) of the intermediate assembly apparatus (200) of the invention is in the form of a circular cavity, which extends starting from the apparatus facade surface (212) to be created, to the body element slot (216) such that its center is on the "x" axis. The shaft slot (213) is a circular cavity which guides the connecting shaft (formed shaft (123) or self-doweled shaft (141) or setscrew puller shaft (151)) and has a geometric form and diameter compatible with connecting shaft (formed shaft (123) or self-doweled shaft (141) or setscrew puller shaft (151)) so as to insert assembly shaft (formed shaft (123) or self-doweled shaft (141) or setscrew puller shaft (151)) through it, to advance the same along the intermediate assembly apparatus (200) to meet the body element (eccentric puller body element (122) or setscrew puller body element (152) or cylinder puller body (172)) located in the body element slot (216). The shaft slot (213) is positioned anywhere on the apparatus facade surface (212) and particularly close to the apparatus bottom surface (231). The diameter of the shaft slot (213) may vary according to the size of the panels (fixed panel (100) and the panel to be fixed (101)) to be assembled to each other and to the size of assembly shaft (formed shaft (123) or self-doweled shaft (141) or setscrew puller shaft (151)) and cylindrical puller screw (171) to be used for joining these panels (fixed panel (100) and the panel to be fixed (101)).

After the shaft slot (213) located on the apparatus facade surface (212) is aligned with the connecting shaft (formed shaft (123) or self-doweled shaft (141) or setscrew puller shaft (151)) or cylindrical puller screw (171), the panel side surface (103), which is called edge, of the panel to be fixed (101) is pushed towards the fixed panel (100), and in the meantime the process is completed by advancing the assembly shaft (formed shaft (123) or self-doweled shaft (141) or setscrew puller shaft (151) or cylinder puller screw (171) to the grip or pulling center of the body element that will perform fixing.

***Stage 7-*** In the use of connecting sets defined as Type 1, Type 2, Type 3, Type 4, and Type 5 of the intermediate assembly apparatus (200), locking of the mounting apparatus is provided by pulling it with a screwdriver placed in the screwdriver slot on the body element (eccentric puller body element (122) or setscrew puller body element (152)) placed in the body element slot (216).

There are steps such that the body element (eccentric puller body element (122) or setscrew puller body element (152)) grasps at the end portions of the connecting shafts (formed shaft (123) or self-doweled shaft (141) or setscrew puller shaft (151)) used with connection sets defined as Type 1, Type 2, Type 3, Type 4, and Type 5. End points of the shafts (formed shaft (123) or self-doweled shaft (141) or setscrew puller shaft (151)) facing the direction of the panel to be fixed (101) generally have the same diameter with the shaft (formed shaft (123) or self-doweled shaft (141) or setscrew puller shaft (151)). When moving forward from the end point, this diameter size is designed in a stepwise form, which narrows first and then expands again until it reaches the same diameter size of the shaft (formed shaft (123) or self-doweled shaft (141) or setscrew puller shaft (151)).

The body elements (eccentric puller body element (122) or setscrew puller body element (152)) grasp the shaft (formed shaft (123) or self-doweled shaft (141) or setscrew puller shaft (151)) from the narrow step on the shaft (formed shaft (123) or self-doweled shaft (141) or setscrew puller shaft (151)) by means of this stepwise structure, and when the body element (eccentric puller body element (122) or setscrew puller body element (152)) is rotated with a screwdriver, it pulls the shafts (formed shaft (123) or self-doweled shaft (141) or setscrew puller shaft (151)) towards the center of their body.

While using type 6 defined connection set, the assembly of the cylinder puller screw (171), which is inserted into the puller screw hole (173) in the form of a full hole drilled on the fixed panel (100), is performed by rotating the same with a standard allen key (195). After the puller screw (171) is attached to the screw slot inside the cylinder puller body (172) placed in the upper slot of the intermediate assembly apparatus (200), the puller screw (171) tightened with an allen key (195) ensures that the panel to be fixed (101) is fixed by pulling it to the fixed panel (100).

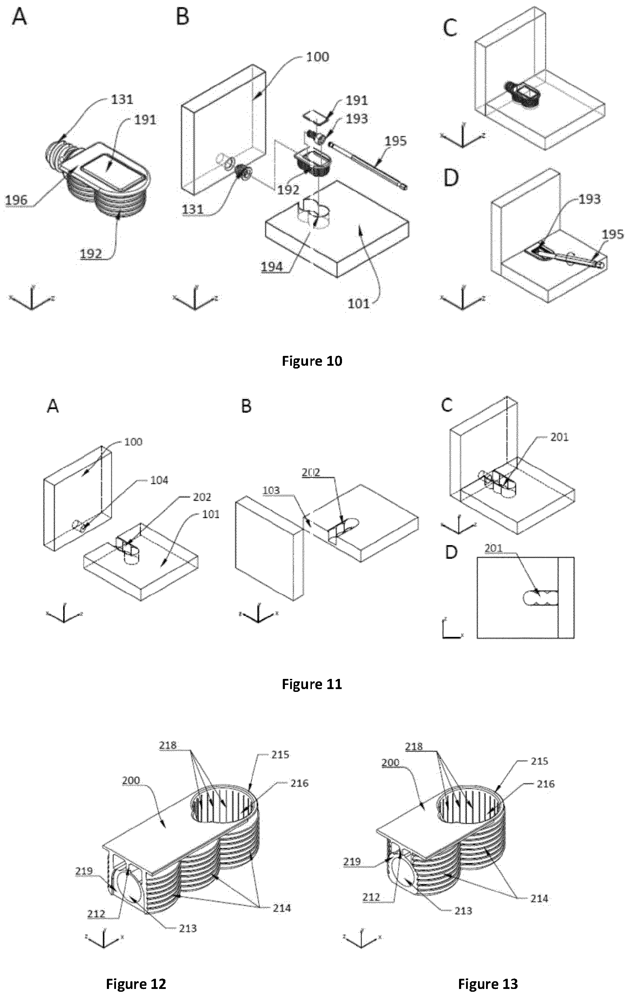

Perspective view of the intermediate assembly apparatus (200) is given in Figure 12 and Figure 13. The geometric form of the intermediate assembly apparatus (200) has been formed in a manner such that it is compatible with the geometric form of the holes or slots to be formed on the panels in the processing to be performed on the panel processing benches. Here, since the drilling bits used in the processing of the panels (fixed panel (100) and the panel to be fixed (101)) on the machining bench make circular movements and form holes or slots, even when creating a long slot, the created slot actually consists of the combination of a plurality of hole forms. In other words, a circular intermediate assembly apparatus slot (201) is formed on the panel (fixed panel (100) and the panel to be fixed (101)) or forms with a plurality of circular intermediate assembly apparatus slot (201) are formed due to the circular mark left by each end of the drilling bit where it contacts. This is an indispensable geometric form due to the processing technique of wood processing benches. For this reason, the geometric form of the intermediate assembly apparatus (200) of the invention also has an appearance consisting of the combination of at least two circular bodies (230). In Figures 14 and 15, perspective views of the lower surface of the intermediate assembly apparatus (200) of the triple hole form (Figure 14) and the double hole form (Figure 15), which are two different forms of the intermediate assembly apparatus (200), are given. Here, a body consisting of at least two circular bodies (230) is observed. In Figure 11, intermediate assembly apparatus slot (201) of the panels to be connected (fixed panel (100), the panel to be fixed (101)) opened on the panel processing benches and the screw hole (104) drilled for dowels (formed shaft (123), setscrew puller shaft (151) is shown. As it can be understood from here, forming the slots and holes drilled on the panel (fixed panel (100) and the panel to be fixed (101)) in panel processing benches from nested holes in a circular form or as a combination of a plurality of circles is a necessity due to the technical function of the panel processing machine. The geometric form of the intermediate assembly apparatus (200) is designed to be compatible with this intermediate assembly apparatus slot (201) due to this technique of the panel processing machine.

There are skirts (142) at the dowel starting points of the self-doweled shafts (141) in Type 3 connection sets. In case these skirts (142) are pressed towards the fixed panel (100) so as to attach the self-doweled shaft (141), they prevent the self-doweled shaft (141) from advancing in the drilled hole. However, these skirts (142) cause gaps between the connection surfaces during the fastening of the fixed panel (100) and the panel to be fixed (101) depending on their protruding structure. The amount of these gaps between the two panels (fixed panel (100) and the panel to be fixed (101)) is minimized by crushing the wooden surface of the self-doweled shaft (141) remaining in between as a result of pulling two panels (fixed panel (100) and panel to be fixed (101)) together by applying excessive force in assembly applications of connection sets defined Type 3. Performing pulling process by applying extra force in this manner may cause consequences such as breaking and damaging the eccentric puller element body (122). This drawback is eliminated with the recess section (219) formed around the starting point of the shaft slot (213) on the apparatus facade surface (212) of the intermediate assembly apparatus (200). The dowel holder skirts (142) are placed in this recess section (219) and do not cause any gaps in the connection interfaces.

A second-step gap, which is called rectangular pocket is created in the processing systems with the hole forms drilled on the panel to be fixed (101) where the intermediate assembly apparatus (200) of the invention is fixed. This gap is created in the form of a panel hole rectangular pocket (202) with a width, which is not exceeding the diameters of the holes of the intermediate assembly apparatus slot (201) where the intermediate assembly apparatus (200) will be located, and creating the gap is left to the user's choice. This gap is created in case the user requires the apparatus upper surface (217) of the intermediate assembly apparatus (200) called cap and the panel upper surface (102) of the panel to be fixed (101) are at the same height. In Figure 11A and Figure 11B, this panel hole rectangular pocket (202) can be seen from different angles. After forming the intermediate assembly apparatus slot (201) on the panel to be fixed (101), the apparatus upper surface (217) of the intermediate assembly apparatus (200) placed in the intermediate assembly apparatus slot (201) and the panel upper surface (102) of the panel to be fixed (101) are aligned. Due to the fact that the panel to be fixed (101) and the apparatus upper surface (217) of the intermediate assembly apparatus (200) are in alignment, the width length of the apparatus upper surface (217) has the same length with the diameter of the circular bodies (230) of the intermediate assembly apparatus (200), drawer rails and other furniture elements that can coincide with the surfaces on which the intermediate assembly apparatus (200) are located can be fully attached to the surface. This problem, which occurs in Type 9 connection sets, can be eliminated by using connection sets defined as Type 1, Type 2, Type 3, Type 4, Type 5 and Type 6 together with the intermediate assembly apparatus (200).

In Type 9 connection sets defined in the state of the art, fixation by taking support from the plastic step inside the setscrew plastic part (192) of the connection element with the pre-mounted screw (193) attached to the plastic dowel (121) on the fixed panel (100) causes to question the durability of the connection system. The number of fasteners to be used in joining the panels has been increased in order to eliminate this problem. Concordantly, the number of fasteners used at each junction has increased, thus, this had a negative impact on production costs.

The intermediate assembly apparatus (200), which is used in the furniture industry for years and whose reliability is proved in all durability tests allows for using Type 1, Type 2, Type 3, Type 4, Type 5 and Type 6 defined connection sets with holes and forms to be drilled on the panel upper surface (102) of only the wooden panels(fixed panel (100) and the panel to be fixed (101)), ensures that an important deficiency is fulfilled in the sector by means of the present invention.

Aligning the pre-mounted screw (193), which is placed into the channel of the setscrew plastic part (192) positioned onto the panel to be fixed (101) in Type 9 connection sets defined in the state of the art, to the metal dowel (131) located on the fixed panel (100) and fixing it reduce the efficiency of installation during the assembly process.

The assembly of panels (fixed panel (100) and panel to be fixed (101)) to each other is ensured by aligning the shaft slot (213) hole of the intermediate assembly apparatus (200) on the panel to be fixed (101) to the connecting shaft (formed shaft (123) or self-doweled shaft (141) or setscrew puller shaft (151)) on the fixed panel (100) and then pushing the panel to be fixed (101) towards the fixed panel (100). Attaching the intermediate assembly apparatus (200) on the panel to be fixed (101) to the fixed assembly shaft (formed shaft (123) or self-doweled shaft (141) or setscrew puller shaft (151)) is more practical than assemblies made with Type 9 defined connection sets.

The necessity of completely aligning the end point of the pre-mounted screw (193) to the hole of the metal dowel (131) also makes the assembly conditions difficult during assembling the pre-mounted screw (193) used in the Type 9 connection sets defined in the state of the art to the metal dowel (131) on the fixed panel (100).

Due to the fact that the diameter of the shaft slot (213) of the intermediate assembly apparatus (200) is larger and the diameter of the connecting shafts (formed shaft (123) or self-doweled shaft (141) or setscrew puller shaft (151)) and cylindrical puller screws (171) is approximately 20% smaller than the shaft slot (213) of the intermediate assembly apparatus (200), assembly can be performed under more tolerant conditions by means of using the intermediate assembly apparatus (200) and connection sets defined as Type 1, Type 2, Type 3, Type 4, Type 5 and Type 6 in combination. Processing errors below 1 mm that occur in dowel holes drilled on fixed panels (100) can be eliminated at the assembly state by means of this tolerance. After aligning the panels (fixed panel (100) and the panel to be fixed (101)) with respect to other panels while performing pulling process during fixing process, corner extensions, which are particularly formed in corner joint panels, can be removed by pulling. In Type 9 connection sets, fixation is made with pre-mounted screw (193) and the pre-mounted screw (193) must be attached to the threads of the metal dowel (131) by full alignment. In the assemblies performed under these conditions, the tolerance ratios are realized at minimum levels. Measurement errors and protrusions occur at the junction points of the panels in improper drilling processes.

It is possible to use the panels produced with the intermediate assembly apparatus slot (201) to be created from the panel upper surface (102) during the panel processing stages, connection sets of Type 1, Type 2, Type 3, Type 4, Type 5 and Type 6, which have been common for years and have high assembly tolerance ratios, can be used by means of the present invention. This deficiency is eliminated by providing assembly with high tolerance rates by using the intermediate assembly apparatus (200) and connection sets defined as Type 1, Type 2, Type 3, Type 4, Type 5 and Type 6 together.

In Type 9 defined connection sets, the processes of attaching the pre-mounted screw (193) placed in the setscrew plastic part (192) into the hole of metal dowel (131) by means of the allen key (195) with angled-tip and tightening the same makes assembly conditions difficult. In Type 9 defined connection sets, using an allen key (195) with an angled tip, which is a special tool, and using this allen key (195) by turning it at an angle to the operation area during the fixing of the screw, causes negative results both in terms of ergonomics and in terms of the efficiency of assembly and installation processes.

Connection sets defined as Type 1, Type 2, Type 3, Type 4, Type 5 can be mounted in a practical and ergonomic way at right angles to the work area by using a standard screwdriver together with the intermediate assembly apparatus (200) placed in the intermediate assembly apparatus slot (201) created on the furniture panel upper surfaces (102) by means of the present invention. Type 6 defined connection sets can be mounted in a practical and ergonomic manner at a right angle to the work area by using a standard allen key (195).

A cover (220) may be used such that the body element (eccentric puller body element (122) or setscrew puller body element (152)) and the body element slot (216) are not visible, after the joining process of the two panels (fixed panel (100) and the panel to be fixed (101)) by means of the intermediate assembly apparatus (200) of the invention as described above. The cover (220) is designed such that it fully fits into the cavity on the inner section of the screwdriver slot on the body elements (eccentric puller body (122) or setscrew puller body (152)) or roller puller (172)). The cover (220) is closed in a manner such that it fits completely into the channel. The cover (220) has a detachable structure so that the body element (eccentric puller body element (122) or setscrew puller body element (152)) or cylinder puller body (172)) can be opened and closed when desired.

As a summary, the present invention provides an intermediate assembly apparatus (200) which, once fixed into an intermediate assembly apparatus slot (201) created on the upper surface (102) of the panel to be fixed (101), enables the easy assembly of panels, namely the fixed panel (100) and the panel to be fixed (101), in panel-type furniture. The apparatus allows the use of connection sets of the types commonly employed in the industry (Type 1 to Type 6), whose reliability are proved without requiring any process on the panel side surfaces (103), which are called edges, of the panels to be fixed (101). The present invention provides a connection, which is more durable, practically applicable, ergonomic and having a high assembly tolerance, when compared to the existing connection elements in the industry as an alternative to the present invention.

## Claims

1. An intermediate assembly apparatus (200) for joining a fixed panel (100) and
a panel to be fixed (101) , wherein the intermediate assembly apparatus (200) is positioned in an intermediate assembly apparatus slot (201), which is created on a panel upper surface (102), without drilling a hole from a panel side surface (103) of the panel to be fixed (101), that consists of at least two circular bodies (230) joining the fixed panel (100) and the panel to be fixed (101), wherein it comprises an apparatus back surface (215), an apparatus upper surface (217), an apparatus bottom surface (231) and an apparatus façade surface (212), and
• **a body element slot (216)** that is a circular cavity which is located in part close to the apparatus back surface (215) and on a central axis, starts in the apparatus upper surface (217) and ends in the apparatus bottom surface (231), wherein the apparatus bottom surface (231) is a closed bottom surface and into which any one of an eccentric puller connection set, a setscrew puller connection set, or a cylindrical puller connection set can fit and has threads (218), wherein said threads are positioned inside the body element slot (216) starting from the apparatus upper surface (217) and extend towards the apparatus bottom surface (231) in order to position any one of the eccentric puller connection set, the setscrew puller connection set, or the cylindrical puller connection set for preventing it from going out by swinging back,
• **a shaft slot (213)** that has a circular cavity and guides any one of a formed shaft (123) or a self-doweled shaft (141) or a setscrew puller shaft (151) or a cylindrical puller shaft (171) so as to insert assembly shaft through the apparatus facade surface (212) and move along the intermediate assembly apparatus (200) to meet with the eccentric puller connection set or the setscrew puller connection set or the cylindrical puller connection set element located in the body element slot (216),
• **a recess section (219)** which prevents the formation of gaps between the connection surfaces during the attachment of the fixed panel (100) and the panel to be fixed (101), and is formed around the starting point of the shaft slot (213) on the apparatus facade surface (212) of the intermediate assembly apparatus (200),
• and wherein the apparatus upper surface (217) is in a closed form up to the body element slot (216).

2. An intermediate assembly apparatus (200) according to Claim 1, **characterized in that**; said body element slot (216) has an open top portion on the apparatus upper surface (217) and a closed lower portion on the apparatus bottom surface (231) so that any one of the eccentric puller connection sets, or any one of the setscrew puller connection sets, or any one of the cylindrical puller connection sets is positioned inside said body element slot (216).

3. An intermediate assembly apparatus (200) according to Claim 1, **characterized in that**; the shaft slot (213) therein is located anywhere on the apparatus facade surface (212) and especially close to the apparatus bottom surface (231).

4. An intermediate assembly apparatus (200) according to Claim 1, **characterized in that**; width of the apparatus upper surface (217) has the same length with diameter of the circular bodies (230).

5. An intermediate assembly apparatus (200) according to Claim 1, **characterized in that**; the body element slot (216) thereof has a cover (220) so that any of the eccentric puller connection set or the setscrew puller connection set or the cylindrical puller connection set are not seen after positioning inside the body element slot (216).

6. An intermediate assembly apparatus (200) according to Claim 1, **characterized in that**; on side surfaces of the intermediate assembly apparatus (200) have screw threads (214), which enables the intermediate assembly apparatus (200) to be attached to the panel to be fixed (101).

## Patentansprüche

1. Eine Zwischenmontagevorrichtung (200) zum Verbinden einer feststehende Platte (100) und einer zu befestigenden Platte (101), wobei die Zwischenmontagevorrichtung (200) in einem Zwischenmontagevorrichtungsschlitz (201) positioniert ist, der auf einer Plattenoberfläche (102) ohne Bohren eines Lochs von einer Plattenseitenfläche (103) der zu befestigenden Platte (101) hergestellt wird, die aus mindestens zwei kreisförmigen Körpern (230) besteht, die die feststehende Platte (100) und die zu befestigende Platte (101) verbinden, wobei sie eine Rückfläche der Vorrichtung (215), eine obere Fläche der Vorrichtung (217), eine Bodenfläche der Vorrichtung (231) und eine Frontfläche der Vorrichtung (212) aufweist und
• **einen Körperelementschlitz (216),** der ein kreisförmiger Hohlraum ist, der sich in einem Bereich nahe der Rückfläche der Vorrichtung (215) und auf einer Mittelachse befindet, an der oberen Fläche der Vorrichtung (217) beginnt und an der Bodenfläche der Vorrichtung (231) endet, wobei die Bodenfläche der Vorrichtung (231) eine geschlossene Bodenfläche ist und in die ein exzentrischer Zugverbindungssatz, ein Gewindestift-Zugverbindungssatz oder ein zylindrischer Zugverbindungssatz passen kann, und die Gewinde (218) aufweist, wobei die Gewinde innerhalb des Körperelementschlitzes (216) angeordnet sind, beginnend an der oberen Fläche der Vorrichtung (217) und sich in Richtung der Bodenfläche der Vorrichtung (231) erstreckt, um einen exzentrischen Zugverbindungssatz, einen Gewindestift-Zugverbindungssatz oder einen zylindrischen Zugverbindungssatz zu positionieren, um zu verhindern, dass dieser durch Zurückschwingen herausrutscht,
• **einen Schaftschlitz (213),** der einen kreisförmigen Hohlraum aufweist und einen geformten Schaft (123) oder einen selbstdübelnden Schaft (141) oder einen Gewindestift-Zugschaft (151) oder einen zylindrischen Zugschaft (171) führt, um einen Montageschaft durch die Frontfläche der Vorrichtung (212) einzuführen und sich entlang der Zwischenmontagevorrichtung (200) zu bewegen, um mit dem exzentrischen Zugverbindungssatz- oder dem Gewindestift-Zugverbindungssatz- oder dem zylindrischen Zugverbindungssatz-Element in Kontakt zu kommen, das sich im Körperelementschlitz (216) befindet,
• **einen Aussparungsabschnitt (219),** der die Bildung von Spalten zwischen den Verbindungsflächen während der Befestigung der feststehenden Platte (100) und der zu befestigenden Platte (101) verhindert und um den Anfangspunkt des Schaftschlitzes (213) auf der Frontfläche (212) der Zwischenmontagevorrichtung (200) herum ausgebildet ist,
• und wobei die obere Fläche der Vorrichtung (217) bis zum Körperelementschlitz (216) in einer geschlossenen Form ist.

2. Eine Zwischenmontagevorrichtung (200) gemäß Anspruch 1, **dadurch gekennzeichnet, dass** der Körperelementschlitz (216) einen offenen oberen Abschnitt auf der oberen Fläche der Vorrichtung (217) und einen geschlossenen unteren Abschnitt auf der Bodenfläche der Vorrichtung (231) aufweist, so dass einer der exzentrischen Zugverbindungssätze oder einer der Gewindestift-Zugverbindungssätze oder einer der zylindrischen Zugverbindungssätze innerhalb des Körperelementschlitzes (216) positioniert ist.

3. Eine Zwischenmontagevorrichtung (200) gemäß Anspruch 1, **dadurch gekennzeichnet, dass** sich der Schaftschlitz (213) darin an einer beliebigen Stelle auf der Frontfläche der Vorrichtung (212) und insbesondere nahe der Bodenfläche der Vorrichtung (231) befindet.

4. Eine Zwischenmontagevorrichtung (200) gemäß Anspruch 1, **dadurch gekennzeichnet, dass** die Breite der oberen Fläche der Vorrichtung (217) die gleiche Länge wie der Durchmesser der kreisförmigen Körper (230) aufweist.

5. Eine Zwischenmontagevorrichtung (200) gemäß Anspruch 1, **dadurch gekennzeichnet, dass** der Körperelementschlitz (216) eine Abdeckung (220) aufweist, so dass ein exzentrischer Zugverbindungssatz oder ein Gewindestift-Zugverbindungssatz oder ein zylindrischer Zugverbindungssatz nach dem Positionieren innerhalb des Körperelementschlitzes (216) nicht sichtbar sind.

6. Zwischenmontagevorrichtung (200) gemäß Anspruch 1, **dadurch gekennzeichnet, dass** an den Seitenflächen der Zwischenmontagevorrichtung (200) Schraubgewinde (214) vorgesehen sind, die es ermöglichen, die Zwischenmontagevorrichtung (200) an der zu befestigenden Platte (101) anzubringen.

## Revendications

1. Appareil d'assemblage intermédiaire (200) pour assembler un panneau fixe (100) et un panneau à fixer (101), dans lequel l'appareil d'assemblage intermédiaire (200) est positionné dans une fente d'appareil d'assemblage intermédiaire (201), qui est créée sur une surface supérieure de panneau (102), sans percer de trou dans une surface latérale de panneau (103) du panneau à fixer (101), qui consiste en au moins deux corps circulaires (230) assemblant le panneau fixe (100) et le panneau à fixer (101), dans lequel il comprend une surface arrière d'appareil (215), une surface supérieure d'appareil (217), une surface inférieure d'appareil (231) et une surface de façade d'appareil (212), et
- une fente d'élément de corps (216) qui est une cavité circulaire qui est positionnée dans une partie à proximité de la surface arrière d'appareil (215) et sur un axe central, commence dans la surface supérieure d'appareil (217) et se termine dans la surface inférieure d'appareil (231), dans lequel la surface inférieure d'appareil (231) est une surface inférieure fermée et dans laquelle l'un quelconque parmi un ensemble de raccordement d'extracteur excentrique, un ensemble de raccordement d'extracteur de vis de pression ou un ensemble de raccordement d'extracteur cylindrique peut s'adapter et a des filetages (218), dans lequel lesdits filetages sont positionnés à l'intérieur de la fente d'élément de corps (216) à partir de la surface supérieure d'appareil (217) et s'étendent vers la surface inférieure d'appareil (231) afin de positionner l'un quelconque parmi l'ensemble de raccordement d'extracteur excentrique, l'ensemble de raccordement d'extracteur de vis de pression ou l'ensemble de raccordement d'extracteur cylindrique pour l'empêcher de sortir en se balançant en arrière,
- une fente d'arbre (213) qui a une cavité circulaire et guide l'un quelconque parmi un arbre formé (123) ou un arbre auto-chevillé (141) ou un arbre d'extracteur de vis de pression (151) ou un arbre d'extracteur cylindrique (171) afin d'insérer l'arbre d'assemblage à travers la surface de façade d'appareil (212) et se déplacer le long de l'appareil d'assemblage intermédiaire (200) pour rencontrer un élément de l'ensemble de raccordement d'extracteur excentrique ou de l'ensemble de raccordement d'extracteur de vis de pression ou de l'ensemble de raccordement d'extracteur cylindrique positionné dans la fente d'élément de corps (216),
- une section d'évidement (219) qui empêche la formation d'interstices entre les surfaces de raccordement pendant la fixation du panneau fixe (100) et du panneau à fixer (101), et est formée autour du point de départ de la fente d'arbre (213) sur la surface de façade d'appareil (212) de l'appareil d'assemblage intermédiaire (200),
- et dans lequel la surface supérieure d'appareil (217) est dans une forme fermée jusqu'à la fente d'élément de corps (216).

2. Appareil d'assemblage intermédiaire (200) selon la revendication 1, **caractérisé en ce que** ladite fente d'élément de corps (216) a une partie supérieure ouverte sur la surface supérieure d'appareil (217) et une partie inférieure fermée sur la surface inférieure d'appareil (231) de sorte que l'un quelconque des ensembles de raccordement d'extracteur excentrique ou l'un quelconque des ensembles de raccordement d'extracteur de vis de pression ou l'un quelconque des ensembles de raccordement d'extracteur cylindrique est positionné à l'intérieur de ladite fente d'élément de corps (216).

3. Appareil d'assemblage intermédiaire (200) selon la revendication 1, **caractérisé en ce que** la fente d'arbre (213) dans ce dernier est positionnée quelque part sur la surface de façade d'appareil (212) et en particulier à proximité de la surface inférieure d'appareil (231).

4. Appareil d'assemblage intermédiaire (200) selon la revendication 1, **caractérisé en ce que** la largeur de la surface supérieure d'appareil (217) a la même longueur avec le diamètre des corps circulaires (230).

5. Appareil d'assemblage intermédiaire (200) selon la revendication 1, **caractérisé en ce que** sa fente d'élément de corps (216) a un couvercle (220) de sorte que l'un quelconque parmi l'ensemble de raccordement d'extracteur excentrique ou l'ensemble de raccordement d'extracteur de vis de pression ou l'ensemble de raccordement d'extracteur cylindrique n'est pas observé après le positionnement à l'intérieur de la fente d'élément de corps (216).

6. Appareil d'assemblage intermédiaire (200) selon la revendication 1, **caractérisé en ce que** sur les surfaces latérales de l'appareil d'assemblage intermédiaire (200), on trouve des filetages de vis (214), qui permettent à l'appareil d'assemblage intermédiaire (200) d'être fixé sur le panneau à fixer (101).
